# EUROPEAN PATENT SPECIFICATION

(11) **EP 2 708 630 B1**
(45) Date of publication and mention of the grant of the patent: **24.04.2019**
(21) Application number: 13183992.0
(22) Date of filing: 11.09.2013
(51) Int. Cl.: D06F 37/30

(54) **Drum Washing Machine**
Trommelwaschmaschine
Machine à laver à tambour

(30) Priority: 14.09.2012 KR 20120102431; 22.08.2013 KR 20130099514
(43) Date of publication of application: 19.03.2014
(73) Proprietor: Samsung Electronics Co., Ltd., Gyeonggi-do 16677 (KR)
(72) Inventor: Lee, In Ju, Gyeonggi-do (KR); Choi, Min Jea, Gyeonggi-do (KR); Ryu, Doo Young, Gyeonggi-do (KR); Kim, Ji Sung, Gyeonggi-do (KR)
(74) Representative: Walaski, Jan Filip

(56) References cited:
- EP-A1- 1 724 437
- EP-A2- 2 325 370
- US-A- 5 873 269

## Description

The present invention relates to a drum washing machine which has an improved structure of a shaft to prevent damage to the shaft or abrasion of the shaft.

A drum washing machine washes clothes using electric power, and generally includes a tub storing wash water, a drum rotatably installed within the tub, and a motor rotating the drum. Such a drum washing machine washes laundry using falling of water while rotating the drum, uses an electric motor as a main power source, and performs a washing, rinsing and spin-drying process so as to remove contaminants from the laundry using detergent and water.

The drum washing machine may rotate the drum at a high speed during the washing, rinsing and spin-drying process. The drum is rotated by the motor, and driving power of the motor is transmitted to the drum by a shaft.

Conventionally, when stress is concentrated on a designated portion of the shaft, one side of the shaft is cracked. Due to cracking, portions of the shaft at which stress is not concentrated are damaged and thus, the shaft is finally is broken. Further, conventionally, friction between the shaft and a bearing and abrasion of the shaft and the bearing are generated due to a difference between the rotational speed of the shaft and the rotational speed of the bearing during operation of the washing machine. This generates a gap between the shaft and the bearing and thus causes vibration and noise and damage to the bearing. In order to solve such a problem, an O-ring is used. However, in this case, it may be difficult to ensure durability.

US5873269 relates to a power system for a washing machine. EP1724437 relates to a shaft for a steam or gas turbine, where the shaft has a groove for reducing stress.

Therefore, it is an aspect of the present disclosure to provide a drum washing machine having a structure which increases strength of a shaft to prevent damage to the shaft.

Additional aspects of the disclosure will be set forth in part in the description which follows and, in part, will be apparent from the description, or may be learned by practice of the disclosure.

According to the present invention, there is provided a drum washing machine according to claim 1. Optional features are set out in the dependent claims.

The first groove is separated from the first and second bearing mount surfaces.

A second groove may be provided at the boundary between the bushing mount surface and the bearing mount surface closest to the second end

The drum washing machine may further include at least one elastic member located between the bushing and the first bearing.

The drum washing machine may further include a sealing member surrounding at least one portion of the bushing to prevent moisture from permeating the bearings.

The drum washing machine may further include at least one elastic member may be located in the second groove.

Inclined parts may be provided at both sides of the first groove.

The inclined parts of the first groove may be rounded.

The first groove may include a plurality of depressions discontinuously provided.

A distance between the drum and the bushing mount surface may be shorter than a distance between the drum and the at least one bearing mount surface.

These and/or other aspects of the disclosure will become apparent and more readily appreciated from the following description of the embodiments, taken in conjunction with the accompanying drawings in which:
FIG. 1 is a cross-sectional view of a drum washing machine in accordance with one embodiment of the present disclosure;
FIG. 2 is an enlarged view of the portion A of FIG. 1;
FIG. 3 is an exploded view illustrating a shaft and a bushing in accordance with the embodiment of the present disclosure;
FIG. 4 is an enlarged view of the shaft in accordance with the embodiment of the present disclosure;
FIG. 5 is a cross-sectional view taken along the line B-B' of FIG. 4;
FIG. 6 is a view illustrating polishing of one end of the shaft in accordance with the embodiment of the present disclosure;
FIG. 7 is an enlarged view of a shaft in accordance with another embodiment of the present disclosure;
FIG. 8 is an enlarged view of a shaft in accordance with another embodiment of the present disclosure;
FIG. 9 is a cross-sectional view taken along the line C-C' of FIG. 8;
FIG. 10 is an enlarged view of the portion A of a drum washing machine in accordance with another embodiment of the present disclosure;
FIG. 11 is an enlarged view of a shaft of the drum washing machine in accordance with the embodiment of the present disclosure;
FIG. 12 is an exploded view illustrating the shaft and components combined with the shaft in accordance with the embodiment of the present disclosure;
FIG. 13 is an exploded view illustrating the shaft and the components combined with the shaft in accordance with the embodiment of the present disclosure, seen from a different angle;
FIG. 14 is an enlarged view of a shaft of a drum washing machine in accordance with a further embodiment of the present disclosure; and
FIG. 15 is an exploded view illustrating the shaft and components combined with the shaft in accordance with the embodiment of the present disclosure, seen from a different angle.

Reference will now be made in detail to the embodiments of the present disclosure, examples of which are illustrated in the accompanying drawings, wherein like reference numerals refer to like elements throughout.

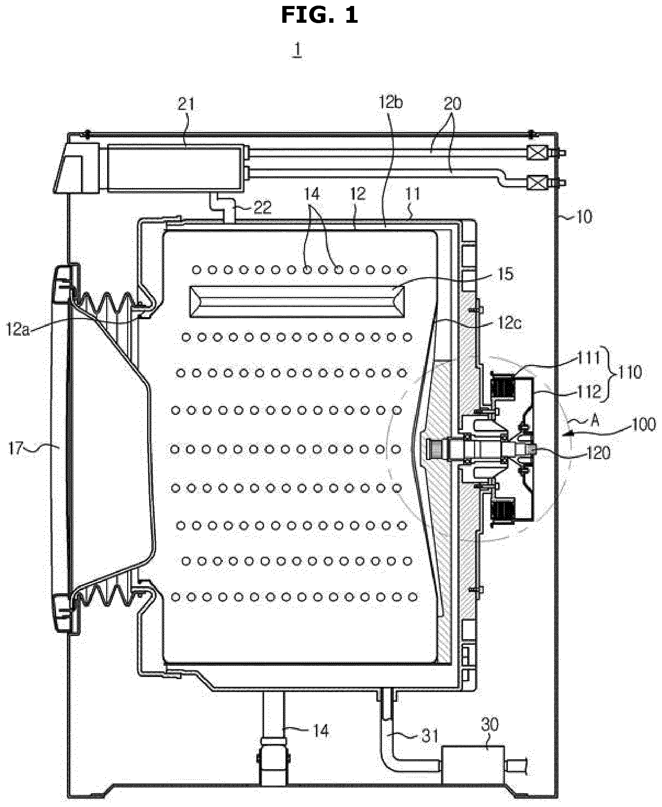

FIG. 1 is a cross-sectional view of a drum washing machine in accordance with one embodiment of the present disclosure.

As shown in FIG. 1, a drum washing machine 1 includes a cabinet 10 forming the external appearance of the drum washing machine 1, a tub 11 disposed within the cabinet 10, a drum 12 rotatably disposed within the tub 11, and a drive unit 100 to rotate the drum 12. According to embodiments, the tub 11 may be formed integrally with the cabinet 10, or the tub 11 may be omitted.

An inlet through which laundry may be put into the drum 12 is formed on the front surface of the cabinet 10. The inlet is opened and closed by a door 17 installed on the front surface of the cabinet 10.

A control panel (not shown) may be installed at the upper region of the front portion of the cabinet 10. The control panel (not shown) may be configured so as to control a washing, rinsing or spin-drying cycle. Further, the control panel (not shown) may display information regarding washing, such as a washing time or a washing course, so that a user may recognize the information regarding washing.

The tub 11 may be elastically supported by the cabinet 10. The tub 11 may be supported by the cabinet 10 using an elastic member (not shown) and a damping member 14. The elastic member (not shown) and the damping member 14 may reduce transmission of vibration of the tub 11 and impact applied to the tub 11 to the cabinet 10. The elastic member (not shown) may include a spring, and the damping member 14 may include an oil damper.

Water supply pipes 20 to supply wash water to the tub 11 are installed above the tub 11. One end of each of the water supply pipes 20 is connected to an external water supply source (not shown), and the other end of each of the water supply pipes 20 is connected to a detergent supply device 21.

The detergent supply device 21 is connected to the tub 11 through a connection pipe 22.

Water supplied through the water supply pipes 20 passes through the detergent supply device 21, and then is supplied to the inside of the tub 11 together with detergent.

A drain pump 30 and a drain pipe 31 to discharge water in the tub 11 to the outside of the cabinet 10 are installed under the tub 11.

The drum 12 may be rotatably supported by the tub 11. The drum 12 may be supported by the tub 11, be rotated alternately in the clockwise direction and the counterclockwise direction, and be rotated at a high speed.

The drum 12 includes a cylindrical member 12b, a front plate 12a disposed at the front portion of the cylindrical member 12b, and a rear plate 12c disposed at the rear portion of the cylindrical member 12b. An opening through which laundry is put into and taken out of the drum 12 is formed on the front plate 12a.

Plural through holes 14 to circulate wash water are formed on the circumference of the drum 12, and plural lifters 15 to lift and drop laundry when the drum 12 is rotated are installed on the inner circumferential surface of the drum 12.

The drive unit 100 includes a motor 110 to generate power to rotate the drum 12, and a shaft 120 transmitting driving power generated from the motor 110 to the drum 12. The drive unit 100 is combined with the rear plate 12c of the drum 12, and will be described later.

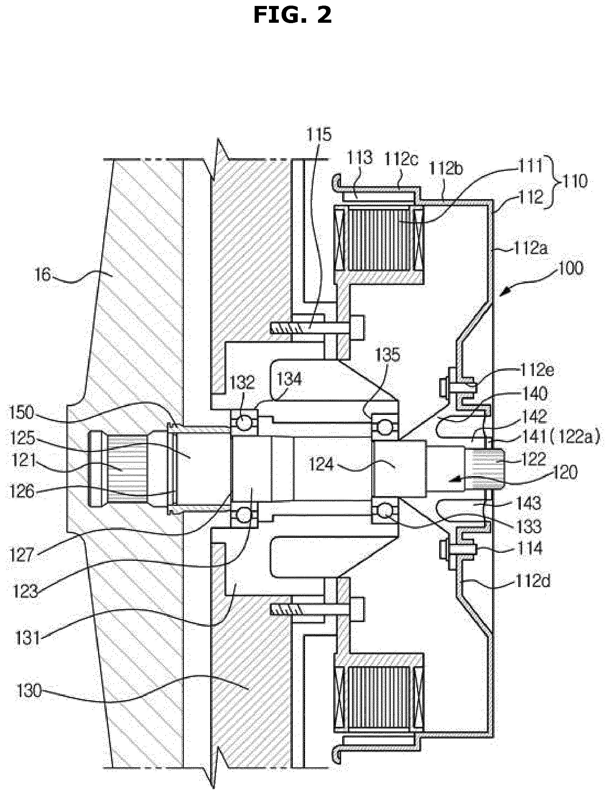

FIG. 2 is an enlarged view of the portion A of FIG. 1.

The drive unit 100 is connected to the rear plate 12c of the drum 12 (with reference to FIG. 1). Particularly, one end of the shaft 120 of the drive unit 100 may be connected to the rear plate 12c, and the other end of the shaft 120 may be extended to the outside of the rear wall of the tub 11 and combined with a rotor 112 of the motor 110. Therefore, when the motor 110 drives the shaft 120, the drum 12 connected to the shaft 120 is rotated about the shaft 120. A portion of the shaft 120 with which the drum 12 is combined is defined as a drum combined part 121, and a portion of the shaft 120 with which the motor 110 is combined is defined as a motor combined part 122. Further, one end of the shaft 120 combined with the drum 12 is defined as a first point, and the other end of the shaft 120 combined with the rotor 112 is defined as a second point. The motor 110 may include the rotor 112 and a stator 111. The rear end of the shaft 120 is connected to the rotor 112. The stator 111 is located within the rotor 112, and is coupled with the rear wall of the tub 11, for example by fasteners 115, so that the stator 111 and the rotor 112 constitute the motor 110. The rotor 112 is rotated by interaction between the rotor 112 and the stator 111, and thus the shaft 120 may be rotated.

A bearing housing 130 may be installed on the rear wall of the tub 11 so as to rotatably support the shaft 120. The bearing housing 130 may be formed of an aluminum alloy, and may be inserted into the rear wall of the tub 11 when the tub 11 is formed by injection molding. At least one bearing 132 and 133 to facilitate rotation of the shaft 120 may be installed between the bearing housing 130 and the shaft 120. As shown in FIG. 2, the at least one bearing 132 and 133 includes a first bearing 132 and a second bearing 133. The first bearing 132 and the second bearing 133 are located between the first point and the second point of the shaft 120. That is, the first bearing 132 and the second bearing 133 are located between the drum combined part 121 and the motor combined part 122.

A bearing housing hub 131 in which the bearings 132 and 133 are located may be formed integrally with the center of the bearing housing 130. Hanging parts 134 and 135 supporting the first bearing 132 and the second bearing 133 to prevent the respective bearings 132 and 133 from being separated from the bearing housing 130 may be formed on the inner circumferential surface of the bearing housing hub 131 at the center of the bearing housing 130. From among the hanging parts 134 and 135 formed on the inner circumferential surface of the bearing housing 130, the first hanging part 134 located at the front is formed in a "¬" shape so as to form a structure supporting the rear end of the first bearing 134. From among the hanging parts 134 and 135 formed on the inner circumferential surface of the bearing housing 130, the second hanging part 135 located at the rear is formed in the direction opposite the first hanging part 134 so as to form a structure supporting the front end of the second bearing 135.

Bearing mount surfaces 123 and 124 to determine the mounting positions of the first bearing 132 and the second bearing 133 on the shaft 120 are provided on the outer circumferential surface of the shaft 120. The surface on which the first bearing 132 is located is defined as a first bearing mount surface 123, and the surface on which the second bearing 133 is located is defined as a second bearing mount surface 124.

Further, a connector 140 transmitting rotating force of the rotor 112 to the shaft 120 may be provided at the rear portion of the shaft 120. The connector 140 may be combined with the outer circumferential surface of the rear portion of the second bearing 133 of the shaft 120 by serrations, and may be coupled with the rotor 112.

The front end of the shaft 120 is combined with a spider 16 provided on the rear wall portion of the drum 12. A bushing 150 to prevent the surface of the shaft 120 from rusting is provided in a region from the portion of the shaft 120 exposed from the rear portion of the spider 16 to the first bearing 132. The bushing 150 may be installed by press fitting. The bushing 150 may surround at least a portion of the outer surface of the shaft 120. The bushing 150 may be formed of brass. Further, a sealing member (not shown) to prevent moisture from permeating the bearings 132 and 133 may be installed on the outer surface of the bushing 150.

The rotor 112 of the motor 110 may be coupled with the center of the rear end of the shaft 120. The stator 111 coupled with and fixed to the bearing housing 130 to constitute the motor 110 together with the rotor 112 may be located within the rotor 112. The rotor 112 is formed of a steel plate, and magnets 113 are located on the inner surface of a side wall 112b extended forwardly from the edge of the rear wall 112a of the rotor 112. A bending part 112c having a mount surface may be provided on the side wall 112b so as to support the magnets 113. Coupling members 114 to prevent the connector 140 combined with the rotor 112 from being separated from the shaft 120 may be combined with the rear wall 112a. A rotor hub part 112d provided with through holes 112e to be combined with the coupling members 114 may be provided on the rear wall 112a.

A connector serration 141 corresponding to a shaft serration 122a formed on the rear end of the shaft 120 may be formed on the inner circumferential surface of a connector hub 142 provided at the center of the connector 140. Further, reinforcing ribs 143 to reinforce the strength of the connector hub 142 may be provided on the outer surface of the connector hub 142.

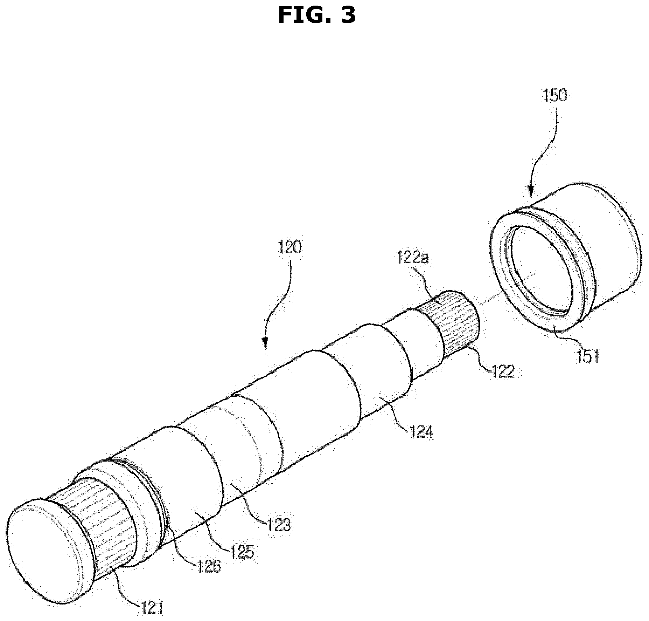

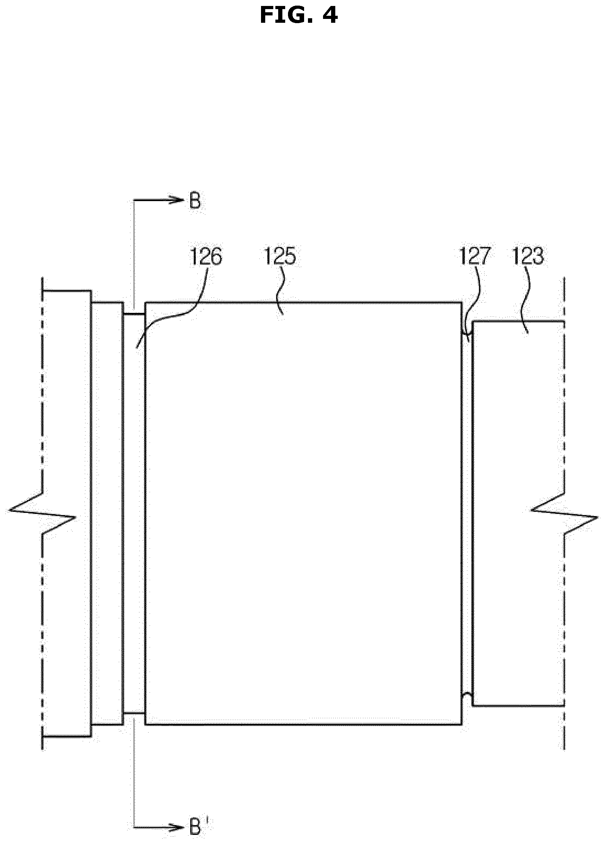

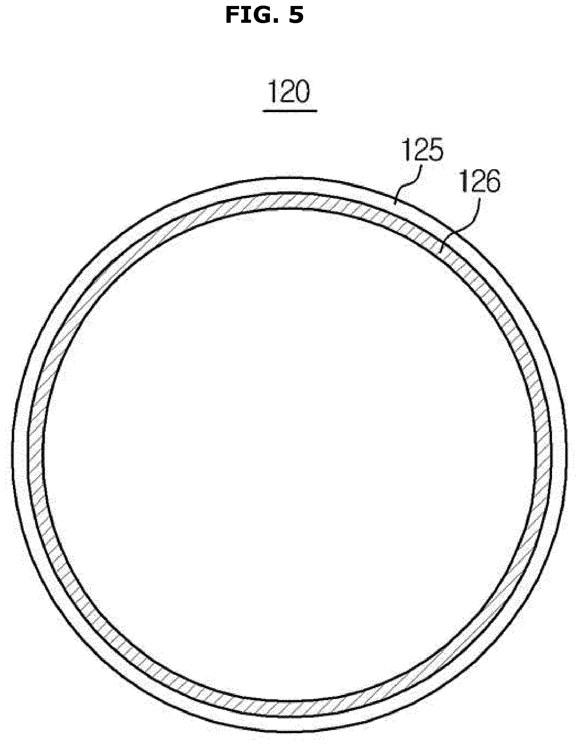

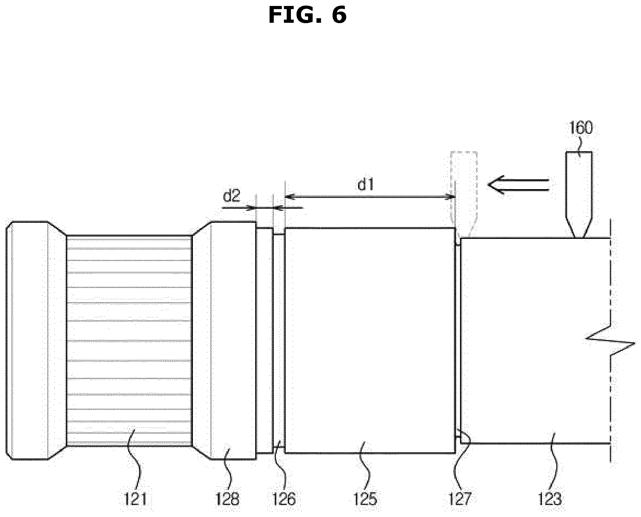

FIG. 3 is an exploded view illustrating the shaft and the bushing in accordance with the embodiment of the present disclosure, FIG. 4 is an enlarged view of the shaft in accordance with the embodiment of the present disclosure, FIG. 5 is a cross-sectional view taken along the line B-B' of FIG. 4, and FIG. 6 is a view illustrating polishing of one end of the shaft in accordance with the embodiment of the present disclosure.

As shown in FIGS. 3 to 6, the drum combined part 121 with which the rear wall of the drum 12, i.e., the spider 16, is combined is provided at one end of the shaft 120. A projection 128 to increase combining force between the shaft 120 and the drum 12 may be provided at one side of the drum combined part 121. Further, the motor combined part 122 with which the motor 110 is combined is provided at the other end of the shaft 120 opposite the drum combined part 121. The motor combined part 122 may be combined with the rotor 112 through the connector 140. The drum combined part 121 and the motor combined part 122 may be respectively combined with the drum 12 and the motor 110 by serrations.

At least one mount surface 123, 124 and 125 with which various members are combined is provided on the shaft 120. That is, a bushing mount surface 125 with which the bushing is combined and the bearing mount surfaces 123 and 124 with which the bearings 132 and 133 are combined are provided. The bearing mount surfaces 123 and 124 have a stepped structure with the outer surface of the shaft 120 so as to combine the bearings 132 and 133 with the outer surface of the shaft 120.

The bushing 150 serves to prevent moisture from permeating from the drum 12 into the bearings 132 and 133, and is located between the drum 12 and the bearings 132 and 133. Thereby, a distance between the drum 12 and the bushing mount surface 150 may be shorter than a distance between the drum 12 and the bearing mount surfaces 123 and 124. A separation prevention part 151 to prevent the bushing 150 from being separated from the shaft 120 may be provided at at least one side of the bushing 150. Although the drawings illustrate the bearing mount surfaces 123 and 124 as including the first bearing mount surface 123 on which the first bearing 132 is mounted and the second bearing mount surface 124 on which the second bearing 133 is mounted, embodiments of the present disclosure are not limited thereto.

At least one groove 126 and 127 to prevent damage to the shaft 120 is provided at one side of the shaft 120. The at least one groove 126 and 127 may be provided in front of the first bearing 132 of the shaft 120. In accordance with one embodiment of the present disclosure, the at least one groove 126 and 127 may include a first groove 126 and a second groove 127. The first groove 126 may be provided between the first bearing 132 and the second point. The first groove 126 may be separated from the first bearing mount surface 123. That is, the second groove 127 may be provided so as to be closer to the first bearing 132 than the first groove 126. In order to rotate the drum 12 according to operation of the drum washing machine 1, force is applied to the shaft 120 during a process of transmitting power of the motor 110 to the drum 12, and thus the shaft 120 is damaged due to stress generated from the inside of the shaft 120. The first groove 126 prevents such damage to the shaft 120, and serves to disperse stress concentrated on a designated portion of the shaft 120. Particularly, in case of the drum washing machine 1, when laundry is concentrated on a designated portion of the drum 12, unbalance (imbalance) may occur, and thus stress may be further concentrated on the shaft 120.

In accordance with the embodiment of the present disclosure, concentration of stress on the shaft 120 may be prevented, and thus such a problem generated in the conventional drum washing machine may be solved. Stress tends to be concentrated on an edge portion of the shaft 120 provided with the first bearing mount surface 123 and, thus, in order to effectively disperse stress, the first groove 126 may be disposed as far away from the first bearing mount surface 123 as possible. Thereby, the first groove 126 is provided on the bushing mount surface 125. The bushing 150 surrounds at least a portion of the outer surface of the shaft 120 so as to surround the contour of the first groove 126. The first groove 126 is formed in a ring shape along the surface of the shaft 120, but the first groove 126 is not limited thereto. In accordance with one embodiment of the present disclosure, the first groove 126 may be formed in a continuous ring shape.

However, if the first groove 126 is excessively far away from the first bearing mount surface 123 and comes close to the drum combined part 121, the rigidity of the drum combined part 121 may be lowered. In accordance with one embodiment of the present disclosure, the first groove 126 may be provided so as to be separated from the first bearing mount surface 123 by 99/1000 or more the entire length of the shaft 120. That is, as shown in FIG. 6, a distance d1 between the first groove 126 and the first bearing mount surface 123 may be 99/1000 or more the entire length of the shaft 120. Even in this case, a designated distance d2 between the drum combined part 121 and the first groove 126 is required. For example, if the entire length of the shaft 120 is 202mm, the distance d1 between the first groove 126 and the first bearing mount surface 123 may be about 21mm. In this case, the distance d2 between the drum combined part 121 and the first groove 126 may be about 4 to 5mm.

The depth of the first groove 126 may be 1/4 or more the width of the first groove 126. In accordance with one embodiment of the present disclosure, if the width of the first groove 126 is 2mm, the depth of the first groove 126 may be 1mm, but the first groove 126 is not limited thereto.

The bushing mount surface 125 may be distorted due to rotation of the drum 12. In order to prevent damage to the shaft 120 due to distortion of the bushing mount surface 125, the diameter of the bushing mount surface 125 may be greater than the diameter of the first bearing mount surface 123. Thereby, a stepped portion may be provided between the bushing mount surface 125 and the first bearing mount surface 123.

Further, the second groove 127 may be provided at the boundary between the first bearing mount surface 123 and the bushing mount surface 125. That is, the second groove 127 may be provided at the stepped portion between the bushing mount surface 125 and the first bearing mount surface 123. The surface of the shaft 120 is ground such that the diameter of the first bearing mount surface 125 is smaller than the diameter of the bushing mount surface 125. In this case, it may be difficult for a grinder 160 to grind the first bearing mount surface 123 contacting the bushing mount surface 125, and thus, the second groove 127 is provided at the boundary between the bushing mount surface 125 and the first bearing mount surface 123. Thereby, the grinder 160 grinds the surface of the shaft 120 up to a position where the second groove 127 is located, thus forming the first bearing mount surface 123. For the same reason, a groove may be provided on the second bearing mount surface 124.

Conventionally, stress is concentrated on the stepped portion between the first bearing mount surface 123 and the bushing mount surface 125, and the shaft 120 is damaged thereby. However, in accordance with one embodiment of the present disclosure, the first groove 126 is provided in addition to the second groove 127, and stress conventionally concentrated on the boundary between the bushing mount surface 125 and the first bearing mount surface 123 may be dispersed to the first groove 126. Further, the first groove 126 may reduce a difference of cross-sectional areas between the bushing mount surface 125 and the first bearing mount surface 123. Therefore, since stress concentrated on the designated portion of the shaft 120 is reduced, the drum washing machine 1 may be used for about 7,200 cycles, increased by 1,000 cycles as compared to the conventional drum washing machine, and thus the lifespan of the drum washing machine 1 may be extended. Further, in accordance with the embodiment of the present disclosure, the strength of the shaft 120 may be improved, and thus, a large-capacity drum washing machine may be mass-produced using such a shaft 120.

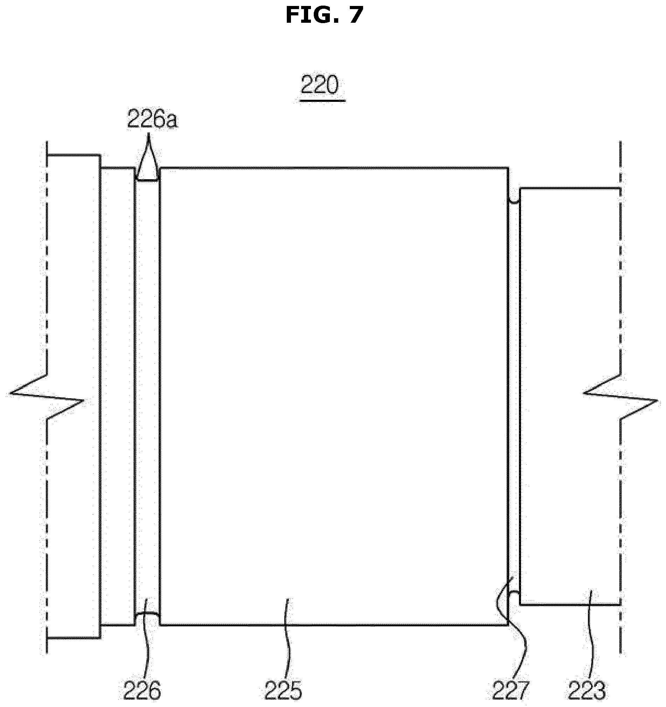

FIG. 7 is an enlarged view of a shaft 220 having a bearing mount surface 223, bushing mount surface 225, first groove 226 and second groove 227 in accordance with another embodiment of the present disclosure.

In accordance with the embodiment of the present disclosure shown in FIG. 7, inclined parts 226a may be provided at both sides of the first groove 226. The inclined parts 226a reduce a height difference between the surface of the first groove 226 and the surface of a shaft 220, and may more effectively prevent concentration of stress on a specific portion of the shaft 220 than in the embodiment of the present disclosure shown in FIGS. 1 to 6. In accordance with one embodiment of the present disclosure, the inclined parts 226a provided at both sides of the first groove 226 may be rounded. The radius r of the inclined parts 226a may be 1/4 or more the entire width of the first groove 226. In accordance with one embodiment of the present disclosure, if the width of the first groove 226 is 2mm, the radius r of the inclined parts 226a may be 0.5mm.

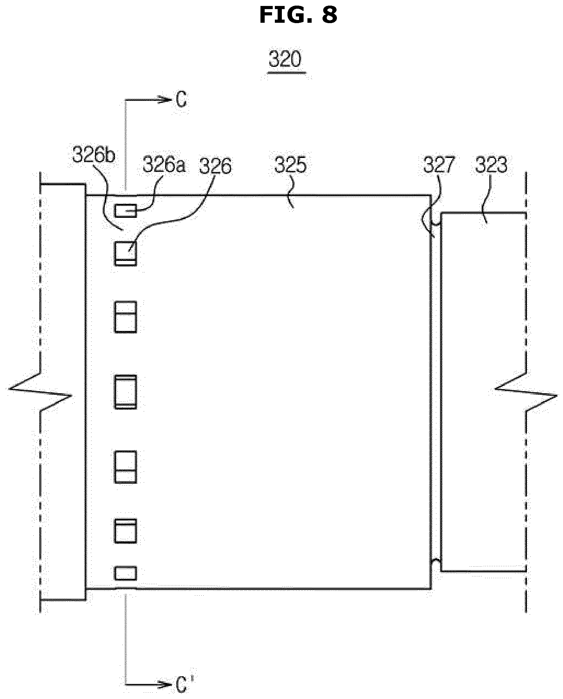

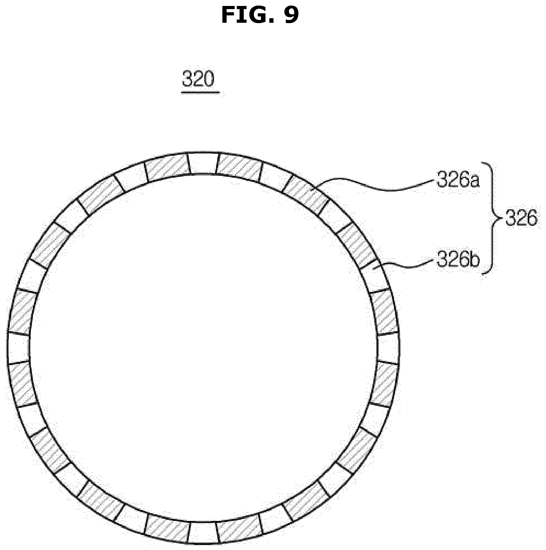

FIG. 8 is an enlarged view of a shaft 320 having a bearing mount surface 323, bushing mount surface 325, first groove 226 and second groove 327 in accordance with a further embodiment of the present disclosure and FIG. 9 is a cross-sectional view taken along the line C-C' of FIG. 8.

As shown in FIGS. 8 and 9, the first groove 326 may be discontinuously provided. That is, the first groove 326 includes depressions 326a provided on the surface 326b of a shaft 320. That is, the depressions 326a are provided at designated intervals on the surface 326b of the shaft 320. The depressions 326a may be extended in the lengthwise direction of the shaft 320, and be extended in the circumferential direction of the shaft 320. Since the first groove 326 is discontinuously formed, stress concentrated on the specific portion of the shaft 320 may be dispersed while maintaining rigidity of the shaft 320 according to rotation of the drum 120, and thus, the lifespan of the shaft 320 may be extended.

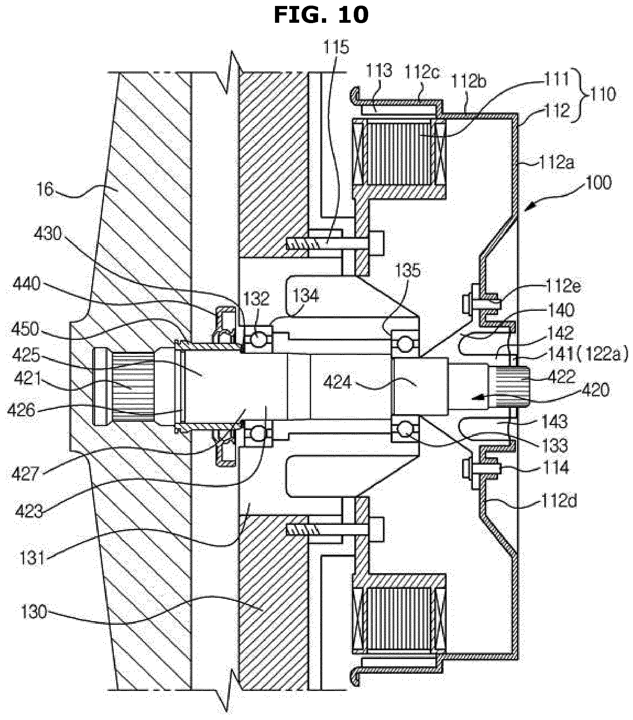

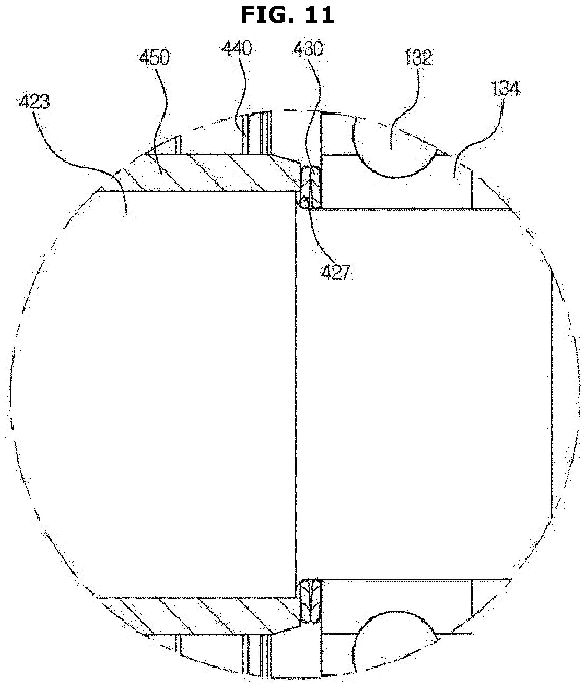

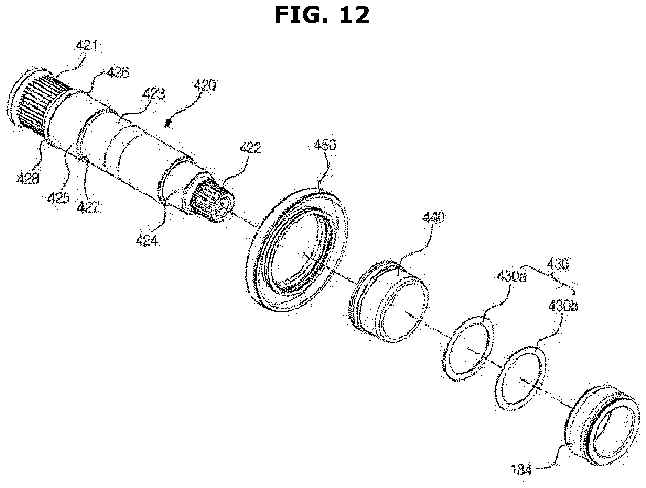

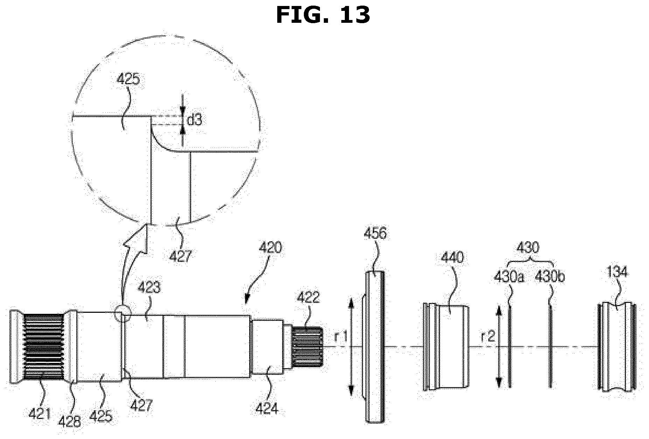

FIG. 10 is an enlarged view of the portion A of a drum washing machine in accordance with another embodiment of the present disclosure, FIG. 11 is an enlarged view of a shaft of the drum washing machine in accordance with the embodiment of the present disclosure, FIG. 12 is an exploded view illustrating the shaft and components combined with the shaft in accordance with the embodiment of the present disclosure, and FIG. 13 is an exploded view illustrating the shaft and the components combined with the shaft in accordance with the embodiment of the present disclosure, seen from a different angle.

Some parts in this embodiment which are substantially the same as those in the earlier embodiment are denoted by the same reference numerals even though they are depicted in different drawings and a detailed description thereof will thus be omitted because it is considered to be unnecessary.

In accordance with the embodiment of the present disclosure shown in FIGS. 10 to 13, an elastic member 430 may be combined with a shaft 420 having a drum combined part 421, a motor combined part 422, bearing mount surfaces 423 and 424, bushing mount surface 425 and projection portion 428. The elastic member 430 may be provided in a ring shape and be inserted into the shaft 420. For example, the elastic member 430 may include a leaf spring, and at least one elastic member 430 may be provided. In accordance with the embodiment of the present disclosure, the at least one the elastic member 430 may include two elastic members, i.e., a first elastic member 430a and a second elastic member 430b.

The shaft 420 may include at least one groove 426 and 427, as described above. The at least one groove 426 and 427 may be located in front of a first bearing 132. Among the at least one groove 426 and 427, one groove located close to the first bearing 132 is defined as a second groove 427, and the other groove is defined as a first groove 426.

That is, a distance between the first bearing 132 and the second groove 427 is smaller than a distance between the first bearing 132 and the first groove 426.

The elastic member 430 may be located in the second groove 427. In accordance with the embodiment of the present disclosure, the second groove 427 has a stepped portion of a designated height difference d3 with the surface of the shaft 420 and thus, the elastic member 430 may be easily inserted into a predetermined position of the shaft 420. Further, such a stepped portion may prevent interference between the inner diameter of the elastic member 430 and the outer diameter of the shaft 420. Thereby, mislocation of the elastic member 430 by operation of the drum washing machine 1 due to interference between the elastic member 430 and the shaft 420 may be prevented.

Further, the elastic member 430 may be maximally close to the outer surface of the shaft 420 due to the stepped portion. The second groove 427 may be rounded as well as have the stepped portion with the surface of the shaft 420.

A bushing 450 to prevent the surface of the shaft 420 from rusting may be provided on the surface of the shaft 420. The elastic member 430 may be located between the first bearing 132 and the bushing 450. Accordingly, the elastic member 430 is installed at a portion of the shaft 420 to which axial force is applied due to rotation of the shaft 420 and the bearings 132 and 135 and thus, adhesion between the bearings 132 and 135 and the shaft 420 may be increased by restoring force of the elastic member 430. Thereby, a rotational speed difference between the shaft 420 and the bearings 132 and 135 may be minimized and abrasion of the shaft 420 may be prevented.

A sealing member 440 to prevent moisture from permeating the bearings 132 and 135 may be installed on the outer surface of the bushing 450. The sealing member 440 may be provided in a ring shape and surround at least a portion of the bushing 450.

The outer diameter r2 of the elastic member 430 may be smaller than the inner diameter a1 of the sealing member 440. Thereby, when the elastic member 430 is inserted into the shaft 420, interference between the elastic member 430 and the sealing member 440 may be prevented. In more detail, when the drum 12 provided with the shaft 420 is inserted into the bearing housing 130 provided with the sealing member 440, if the inner diameter of the elastic member 430 is greater than the inner diameter of the sealing member 440, the elastic member 430 needs to be mounted on the bearings 132 and 135 prior to mounting of the sealing member 440 and it may obstruct assembly efficiency in manufacture of the drum washing machine. However, in the embodiment of the present disclosure, the inner diameter r1 of the sealing member 440 is greater than the outer diameter r2 of the elastic member 430 and thus, interference between the sealing member 440 and the elastic member 430 may be prevented.

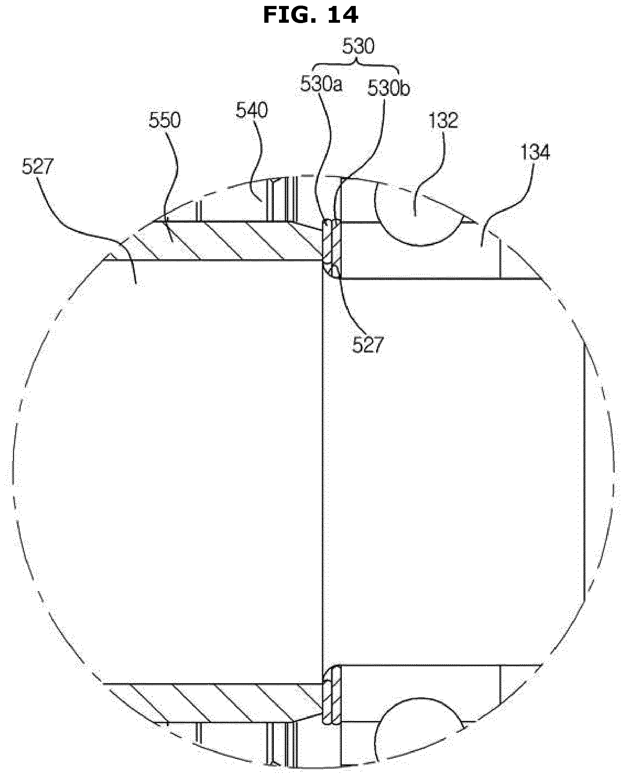

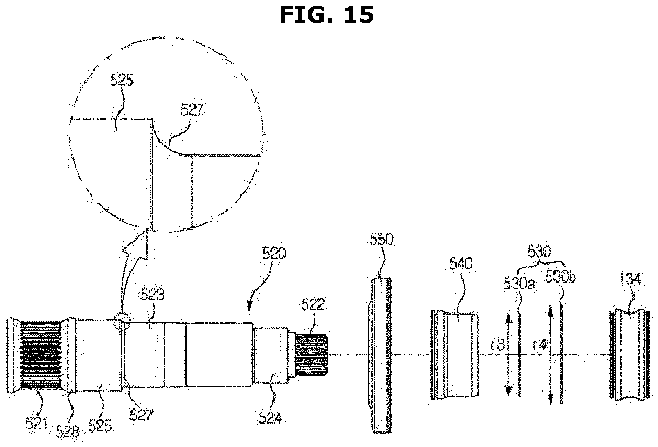

FIG. 14 is an enlarged view of a shaft of a drum washing machine in accordance with a further embodiment of the present disclosure, and FIG. 15 is an exploded view illustrating the shaft and components combined with the shaft in accordance with the embodiment of the present disclosure, seen from a different angle.

In the embodiment shown in FIGS. 14 and 15, a shaft 520 may include a drum combined part 521, a motor combined part 522, bearing mount surfaces 523 and 524, bushing mount surface 525, a first groove 526, a second groove 527 and projection portion 528. At least one elastic member 530 may be combined with the shaft 520. Further, the shaft 520 may further include a sealing member 550 and a bushing 540 combined with the shaft 520.

The at least one elastic member 530 may be provided in a ring shape and include a leaf spring, in accordance with the embodiment of the present disclosure. In accordance with the embodiment of the present disclosure, the at least one the elastic member 530 may include a first elastic member 530a and a second elastic member 530b.

In accordance with this embodiment, the second groove 527 has no stepped portion with the surface of the shaft 520 and is rounded. In this case, interference between the elastic member 530 and the shaft 520 may be generated. In order to prevent such interference, the first elastic member 530a and the second elastic member 530b may have different inner diameters. Particularly, since the second groove 527 is rounded such that the diameter of the second groove 527 is gradually decreased in a direction from a bushing mount surface 525 to a bearing mount surface 523, the inner diameter r3 of the first elastic member 530a located close to the bushing mount surface 525 may be greater than the inner diameter r4 of the second elastic member 530b. In this case, interference between the shaft 520 and the first elastic member 530a may be prevented, and the first elastic member 530a may be closely adhered to the shaft 520 regardless of no stepped portion on the shaft 520.

As is apparent from the above description, a drum washing machine in accordance with one embodiment of the present disclosure may increase strength of a shaft to prevent damage to the shaft, and thus, the lifespan of the drum washing machine may be extended.

Therefore, a large-capacity drum washing machine may be mass-produced using such a shaft without change of the strength of the shaft.

Although a few embodiments of the present invention have been shown and described, it would be appreciated by those skilled in the art that changes may be made in these embodiments without departing from the principles of the invention, the scope of which is defined in the claims.

## Claims

1. A drum washing machine (1) comprising:
a drum (12); and
a drive unit (100) to rotate the drum (12),
wherein the drive unit (100) includes:
a motor (110);
a shaft (120, 220, 320, 420, 520) having first and second ends, the first end (122) coupled to a rotor (112) of the motor (110) and the second end (121) coupled to the drum (12), and transmitting power of the motor (110) to the drum (12), wherein the shaft (120, 220, 320, 420, 520) comprises:
a first bearing (132) and a second bearing (133) located between the first end (122) and the second end (121);
a first bearing mount surface (123, 223, 323, 423, 523) for receiving the first bearing (132) and a second bearing mount surface (124, 424, 524) for receiving the second bearing (133);
a bushing mount surface (125, 225, 325, 425, 525) located between the second end (121) and the bearing mount surface closest to the second end (121); and
a first groove (126, 226, 326, 426) provided on the bushing mount surface (125, 225, 325, 425, 525) to disperse stress concentrated on an edge portion of the shaft (120, 220, 320, 420, 520), wherein the first groove (126, 226, 326, 426) is disposed in a ring shape around the circumference of the shaft (120, 220, 320, 420, 520); and
a bushing (150, 450, 550) mounted to the bushing mount surface (125, 225, 325, 425, 525) and arranged to surround at least a portion of the outer surface of the shaft (120, 220, 320, 420, 520) so as to surround the contour of the first groove (126, 226,326, 426).

2. The drum washing machine according to claim 1, wherein the first groove (126, 226, 326, 426) is separated from the first and second bearing mount surfaces (123, 223, 323, 423, 523; 124, 424, 524).

3. The drum washing machine according to claim 1 or 2, wherein a second groove (127, 227, 327, 427, 527) is provided at the boundary between the bushing mount surface (125, 225, 325, 425, 525) and the bearing mount surface closest to the second end (121).

4. The drum washing machine according to any one of the preceding claims, further comprising an elastic member (430, 530) located between the bushing (150, 450, 550) and the first bearing (132).

5. The drum washing machine according to any one of the preceding claims, further comprising a sealing member (440, 540) surrounding at least one portion of the bushing (150, 450, 550) to prevent moisture from permeating the bearings.

6. The drum washing machine according to claim 4 when dependent on claim 3, wherein the elastic member (450, 530) is located in the second groove (127, 227, 327, 427, 527).

7. The drum washing machine according to any one of the preceding claims, wherein inclined parts provided at both sides of the first groove (126, 226, 326, 426) are rounded.

8. The drum washing machine according to claim 1, wherein the first groove (126, 226, 326, 426) includes a plurality of depressions (326a) discontinuously provided.

9. The drum washing machine according to any one of the preceding claims, wherein a distance between the drum (12) and the bushing mount surface (125, 225, 325, 425, 525) is shorter than a distance between the drum (12) and the bearing mount surface closest to the second end (121).

## Patentansprüche

1. Trommelwaschmaschine (1), die Folgendes umfasst:
eine Trommel (12); und
eine Antriebseinheit (100) zum Drehen der Trommel (12) ,
wobei die Antriebseinheit (100) Folgendes beinhaltet:
einen Motor (110);
eine Welle (120, 220, 320, 420, 520) mit einem ersten und einem zweiten Ende, wobei das erste Ende (122) mit einem Rotor (112) des Motors (110) gekoppelt ist und das zweite Ende (121) mit der Trommel (12) gekoppelt ist, die Kraft des Motors (110) auf die Trommel (12) überträgt, wobei die Welle (120, 220, 320, 420, 520) Folgendes umfasst:
ein erstes Lager (132) und ein zweites Lager (133), die sich zwischen dem ersten Ende (122) und dem zweiten Ende (121) befinden;
eine erste Lagermontagefläche (123, 223, 323, 423, 523) zum Aufnehmen des ersten Lagers (132) und eine zweite Lagermontagefläche (124, 424, 524) zum Aufnehmen des zweiten Lagers (133);
eine Buchsenmontagefläche (125, 225, 325, 425, 525), die sich zwischen dem zweiten Ende (121) und der dem zweiten Ende (121) am nächsten liegenden Lagermontagefläche befindet; und
eine erste Nut (126, 226, 326, 426), die an der Buchsenmontagefläche (125, 225, 325, 425, 525) vorgesehen ist, um an einem Randabschnitt der Welle (120, 220, 320, 420, 520) konzentrierte Spannungen zu verteilen, wobei die erste Nut (126, 226, 326, 426) in einer Ringform um den Umfang der Welle (120, 220, 320, 420, 520) angeordnet ist; und
eine Buchse (150, 450, 550), die an der Buchsenmontagefläche (125, 225, 325, 425, 525) montiert und so ausgelegt ist, dass sie wenigstens einen Abschnitt der Außenfläche der Welle (120, 220, 320, 420, 520) umgibt, um die Kontur der ersten Nut (126, 226, 326, 426) zu umgeben.

2. Trommelwaschmaschine nach Anspruch 1, wobei die erste Nut (126, 226, 326, 426) von der ersten und zweiten Lagermontagefläche (123, 223, 323, 423, 523; 124, 424, 524) getrennt ist.

3. Trommelwaschmaschine nach Anspruch 1 oder 2, wobei eine zweite Nut (127, 227, 327, 427, 527) an der Grenze zwischen der Buchsenmontagefläche (125, 225, 325, 425, 525) und der dem zweiten Ende (121) am nächsten liegenden Lagermontagefläche vorgesehen ist.

4. Trommelwaschmaschine nach einem der vorherigen Ansprüche, die ferner ein elastisches Element (430, 530) umfasst, das sich zwischen der Buchse (150, 450, 550) und dem ersten Lager (132) befindet.

5. Trommelwaschmaschine nach einem der vorherigen Ansprüche, die ferner ein Dichtungselement (440, 540) umfasst, das wenigstens einen Abschnitt der Buchse (150, 450, 550) umgibt, um zu verhindern, dass die Lager von Feuchtigkeit durchdrungen werden.

6. Trommelwaschmaschine nach Anspruch 4 in Abhängigkeit von Anspruch 3, wobei sich das elastische Element (450, 530) in der zweiten Nut (127, 227, 327, 427, 527) befindet.

7. Trommelwaschmaschine nach einem der vorherigen Ansprüche, wobei auf beiden Seiten der ersten Nut (126, 226, 326, 426) vorgesehene geneigte Teile abgerundet sind.

8. Trommelwaschmaschine nach Anspruch 1, wobei die erste Nut (126, 226, 326, 426) mehrere diskontinuierlich vorgesehene Vertiefungen (326a) aufweist.

9. Trommelwaschmaschine nach einem der vorherigen Ansprüche, wobei ein Abstand zwischen der Trommel (12) und der Buchsenmontagefläche (125, 225, 325, 425, 525) kürzer ist als ein Abstand zwischen der Trommel (12) und der dem zweiten Ende (121) am nächsten liegenden Lagermontagefläche.

## Revendications

1. Machine à laver à tambour (1) comportant :
un tambour (12) ; et
une unité d'entraînement (100) servant à des fins de rotation du tambour (12),
dans laquelle l'unité d'entraînement (100) comprend :
un moteur (110) ;
un arbre (120, 220, 320, 420, 520) ayant des première et deuxième extrémités, la première extrémité (122) étant accouplée à un rotor (112) du moteur (110) et la deuxième extrémité (121) étant accouplée au tambour (12), et transmettant de la puissance du moteur (110) au tambour (12), dans laquelle l'arbre (120, 220, 320, 420, 520) comporte :
un premier palier (132) et un deuxième palier (133) se trouvant entre la première extrémité (122) et la deuxième extrémité (121) ;
une première surface de montage de palier (123, 223, 323, 423, 523) servant à recevoir le premier palier (132) et une deuxième surface de montage de palier (124, 424, 524) servant à recevoir le deuxième palier (133) ;
une surface de montage de bague de palier (125, 225, 325, 425, 525) se trouvant entre la deuxième extrémité (121) et la surface de montage de palier la plus proche de la deuxième extrémité (121) ; et
une première rainure (126, 226, 326, 426) mise en oeuvre sur la surface de montage de bague de palier (125, 225, 325, 425, 525) servant à des fins de dispersion de toute contrainte concentrée sur une partie bord de l'arbre (120, 220, 320, 420, 520), dans laquelle la première rainure (126, 226, 326, 426) est disposée en une forme d'anneau autour de la circonférence de l'arbre (120, 220, 320, 420, 520) ; et
une bague de palier (150, 450, 550) montée sur la surface de montage de bague de palier (125, 225, 325, 425, 525) et agencée pour entourer au moins une partie de la surface extérieure de l'arbre (120, 220, 320, 420, 520) de manière à entourer le contour de la première rainure (126, 226, 326, 426) .

2. Machine à laver à tambour selon la revendication 1, dans laquelle la première rainure (126, 226, 326, 426) est séparée des première et deuxième surfaces de montage de palier (123, 223, 323, 423, 523 ; 124, 424, 524).

3. Machine à laver à tambour selon la revendication 1 ou la revendication 2, dans laquelle une deuxième rainure (127, 227, 327, 427, 527) est mise en oeuvre au niveau de la limite entre la surface de montage de bague de palier (125, 225, 325, 425, 525) et la surface de montage de palier la plus proche de la deuxième extrémité (121).

4. Machine à laver à tambour selon l'une quelconque des revendications précédentes, comportant par ailleurs un élément élastique (430, 530) se trouvant entre la bague de palier (150, 450, 550) et le premier palier (132).

5. Machine à laver à tambour selon l'une quelconque des revendications précédentes, comportant par ailleurs un élément d'étanchéité (440, 540) entourant au moins une partie de la bague de palier (150, 450, 550) pour empêcher toute humidité de pénétrer dans les paliers.

6. Machine à laver à tambour selon la revendication 4, quand dépendante de la revendication 3, dans laquelle l'élément élastique (450, 530) se trouve dans la deuxième rainure (127, 227, 327, 427, 527).

7. Machine à laver à tambour selon l'une quelconque des revendications précédentes, dans laquelle des pièces inclinées mises en oeuvre des deux côtés de la première rainure (126, 226, 326, 426) sont arrondies.

8. Machine à laver à tambour selon la revendication 1, dans laquelle la première rainure (126, 226, 326, 426) comprend une pluralité de creux (326a) mis en oeuvre de manière discontinue.

9. Machine à laver à tambour selon l'une quelconque des revendications précédentes, dans laquelle une distance entre le tambour (12) et la surface de montage de bague de palier (125, 225, 325, 425, 525) est plus courte par rapport à une distance entre le tambour (12) et la surface de montage de palier la plus proche de la deuxième extrémité (121) .
